# EUROPÄISCHE PATENTSCHRIFT

(11) **EP 0 835 226 B1**
(45) Veröffentlichungstag und Bekanntmachung des Hinweises auf die Patenterteilung: **13.10.1999**
(21) Anmeldenummer: 96922014.4
(22) Anmeldetag: 18.06.1996
(51) Int. Cl.: C02F 11/12

(54) **VERFAHREN UND VORRICHTUNG ZUR KONTINUIERLICHEN TROCKNUNG VON PROTEIN ENTHALTENDEM SCHLAMM**
PROCESS AND DEVICE FOR CONTINUOUSLY DRYING PROTEIN-CONTAINING SLUDGE
PROCEDE ET DISPOSITIF DE SECHAGE EN CONTINU DE BOUES CONTENANT DES PROTEINES

(30) Priorität: 19.06.1995 DE 19522164
(43) Veröffentlichungstag der Anmeldung: 15.04.1998
(73) Patentinhaber: Andritz-Patentverwaltungsgesellschaft m.b.H., 8045 Graz (AT)
(72) Erfinder: GAISER, Peter, D-80997 München (DE); KOWALCZYK, Dieter, D-83075 Bad-Feilnbach (DE); PLANTIKOW, Ulrich, D- 81373 München (DE)
(74) Vertreter: R.A. KUHNEN & P.A. WACKER
(86) Internationale Anmeldenummer: EP9602633
(87) Internationale Veröffentlichungsnummer: WO9700229

(56) Entgegenhaltungen:
- EP-A- 0 543 133
- WO-A-86/07049
- WO-A-94/13592

## Beschreibung

Die Erfindung bezieht sich auf ein Verfahren und eine Vorrichtung zur kontinuierlichen Trocknung von Protein enthaltendem Schlamm, insbesondere Klärschlamm, in einer Wirbelschicht, die von einem Trocknungsgas durchströmt wird, wobei der Wirbelschicht teilentwässerter Schlamm in Granulatform zugeführt und getrockneter Schlamm entnommen wird, bzw. die einen Trocknungsbehälter, mit einem unteren Vorlageraum für das Trocknungsgas und einer gasdurchlässigen Abstützung für die Wirbelschicht, eine Zuführeinrichtung für den teilentwässerten Schlamm und eine Entnahmeeinrichtung für den getrockneten Schlamm aufweist, wobei die Zuführeinrichtung eine Granuliereinrichtung aufweist.

Schlämme der hier in Rede stehenden Art fallen z.B. in Kläranlagen für kommunale oder industrielle Abwässer mit mindestens einer biologischen Behandlungsstufe, bei der Papierherstellung oder etwa als Ölschlamm an und haben in der Regel einen Trockensubstanzgehalt von 2 bis 5 %. Durch eine mechanische Vorentwässerung wird der Trockensubstanzgehalt meist auf 20 bis 30 % erhöht. Zur weiteren Verwendung, z.B. der Deponierung, als Zuschlagsstoff, als Brennstoff oder als Düngemittel ist eine weitergehende Trocknung erforderlich. Meist wird eine Lagerfähigkeit und eine ausreichende Mahlfähigkeit gefordert, die erst bei Trockensubstanzgehalten von über 90 % erreicht wird, in denen der getrocknete Klärschlamm biologisch stabil ist. Speziell bei der Anwendung als Düngemittel wird eine nur im engen Bereich variierende Korngröße gefordert, die der von Mineraldüngern entsprechen soll, damit der getrocknete Schlamm ohne maschinelle Umstellung auf den Feldern ausgebracht werden kann.

Aus der DE 39 02 446 C1 ist bekannt, Klärschlamm zur Trocknung in eine indirekt beheizte fluidisierte Sandschicht einzubringen. Bei diesem Verfahren wird der Schlamm derart vorgetrocknet, daß er noch einen Wasseranteil von ca. 40% aufweist. Damit ist er noch in pumpfähigem Zustand, hat jedoch die sog. "Leimphase", bei der die Gefahr besteht, daß das Material in sich und am Gehäuse verklebt, bereits vor dem Einbringen in die Sandschicht überschritten. Von Nachteil bei diesem Verfahren ist, daß der Klärschlamm in der Sandschicht während der Trocknung vollständig zu Staub zerrieben wird.

Aus der DE 42 42 747 A1 ist ein Verfahren der Wirbelschichttrocknung von Schlamm ohne trockene Fremdstoffe wie Sand bekannt. Durch die heftigen Reibbewegungen der Partikel in der Wirbelschicht entsteht Abrieb, der als Feinstaub vorliegt. Bei diesem bekannten Verfahren wird ca. 90 % des getrockneten Schlammes wieder dem teilentwässerten Schlamm vor der Trocknung zugemischt. Damit wird erreicht, daß beim Trocknungsvorgang die sogenannte "Leimphase", die bei einem Trockensubstanzgehalt von ca. 40 bis 60 % auftritt, schnell überbrückt wird.

Nachteilig an diesem Verfahren ist der geringe Wirkungsgrad, da nur jeweils ca. 10 % des getrockneten Schlammes entnommen werden können, sowie der hohe Feinstaubgehalt mit Partikeldurchmessern bis zu 500 µm, der bei diesem Verfahren bis zu 20 % der Gesamtmasse des getrockneten Schlammes betragen kann. Weiterhin besteht ohne zusätzliche Vorsorgemaßnahmen die Gefahr von Selbstentzündungen mit dem Luftsauerstoff und von Staubexplosionen aufgrund des hohen Feinstaubgehaltes.

Das Dokument WO 86/07049 A1 offenbart ein Verfahren und eine Vorrichtung zum Trocknen von Klärschlamm. Hierbei wird der flüssige Klärschlamm in einer Vortrocknungseinrichtung in eine pastöse Konsistenz umgewandelt und anschließend zu Partikeln geformt. Die Partikel werden auf einem perforierten Förderband einer Bandfördereinrichtung abgelegt und in einem Trocknungsofen sowohl von oben als auch von unten durch die Perforationslöcher des Förderbandes mit einem Trocknungsgasstrom beaufschlagt. Die somit getrockneten Partikel werden anschließend in einer Sammeleinrichtung aufgenommen, wobei eine Zusatzeinrichtung vorgesehen ist, um die Verklebung zwischen den Partikeln und dem Förderband aufzuheben und so die Perforationslöcher freizumachen.

Diesem Dokument ist jedoch kein Hinweis entnehmbar, wie die sogenannte Leimphase überwunden wird. Da ein Verkleben der Partikel mit der Bandfördereinrichtung auftritt, dürfte beim Gegenstand dieses Dokuments auch ein Verkleben der Partikel untereinander auftreten. Sollte versucht werden, dieses Problem durch eine geringe Schichtdicke der Partikel auf dem Förderband zu umgehen, so würde dies jedoch zu einem niedrigen Wirkungsgrad der Anordnung führen.

Aus der DE 29 43 558 A1 ist schließlich ein Verfahren zum Verarbeiten von Klärschlamm bekannt, bei dem mechanisch vorentwässerter Klärschlamm granuliert und in einem Fließbettrockner getrocknet wird. Zum Granulieren des mechanisch vorentwässerten Schlammes wird hierzu im Mischgranulator u.a. getrocknetes Granulat beigemischt. Das so gebildete Mischgranulat hat bereits einen relativ hohen Trockensubstanzgehalt und ist somit bei Eintritt in die Wirbelschicht bereits jenseits der "Leimphase". Durch das Bereitstellen des Schlammes in Granulatform, also in Form einer Vielzahl von Granulatkörnern, erhält man eine große Partikeloberfläche und somit einen guten Wärmeübergang vom Trocknungsgas. Damit läßt sich die eingesetzte Energie im Prinzip effizient nutzen.

Jedoch ist der Wirkungsgrad dieses Verfahrens aufgrund der Rückführung bzw. Zumischung von Trockensubstanz relativ gering.

Aufgabe der Erfindung ist es, ein Verfahren und eine Vorrichtung zur Trocknung von Protein enthaltendem Schlamm, insbesondere Klärschlamm, der eingangs angegebenen Gattung zu schaffen, mit dem bzw. der sowohl der Zusatz von Fremdstoffen in der Wirbelschicht als auch die Rückführung von bereits getrocknetem Schlamm und Staub in den Prozeß vermieden werden kann, der Wirkungsgrad somit ansteigt und der Energieverbrauch sinkt.

Diese Aufgabe wird verfahrenstechnisch dadurch gelöst, daß die Granulatkörner ohne Zugabe von Trockensubstanz ausgebildet werden und daß der Granuliervorgang vorzugsweise mit einer Pressung verbunden ist, sowie vorrichtungstechnisch dadurch, daß die Zuführeinrichtung frei ist von einer Zumischeinrichtung für Trockensubstanz.

Damit werden überraschende Vorgänge in der Wirbelschicht für die Schlammtrocknung nutzbar gemacht. So hat sich gezeigt, daß es durch die Granulatform möglich ist, die Leimphase im Trocknungsbehälter zulassen zu können.

Bei diesem kontinuierlichen Verfahren enthält die Wirbelschicht kornartig ausgebildete Partikel in allen Stadien der Trocknung. Hierdurch kann die Rückführung von getrocknetem Gut vermieden werden, da sich im Trocknungsbehälter stets eine zur raschen Überwindung der Leimphase ausreichende Menge an getrocknetem Granulat befindet. Durch die Vermischung mit dem getrocknetem Granulat wird ein schnelleres oberflächenseitiges Abtrocknen auf einen Trockensubstanzgehalt von über 60 % erreicht, weshalb das Granulat nur kurzzeitig der Gefahr des Verklebens ausgesetzt ist.

Ein weiterer überraschender Vorteil ist der, daß der durch Abrieb von bereits getrocknetem Granulat gebildete Staub zum großen Teil an die noch feuchten und die sich noch in der Leimphase befindenden Partikel in der Wirbelschicht gebunden wird. Dadurch wird sowohl die Staubmenge reduziert als auch eine Belagbildung an Anlagenteilen und ein Verkleben von Partikeln in der Leimphase wirksam verhindert. Dies gilt insbesondere dann, wenn das Trocknungsgas ohne Staubabscheidung im Kreis geführt wird und nur bei dem den Trockner verlassenden Brüden eine Staubabscheidung durchgeführt wird.

Ferner ist die mit der Formgebung durch eine in der Funktion eines Granulators vorgesehene Granuliereinrichtung verbundene Pressung des Granulats von Vorteil. Dadurch erhält das Granulat eine für die Trocknung in der Wirbelschicht vorteilhafte Anfangsstabilität. Ansonsten besteht die Gefahr, daß die Partikel in der Wirbelschicht zerfallen und eine weitere Nutzung des Granulats nicht möglich wäre. Die neu zugeführten Partikel werden in der Wirbelschicht mit den bereits getrockneten Granulatkörnern durch das einströmende Trocknungsgas vermischt und durch die gute Durchmischung, die große Partikeloberfläche und die Wahl eines geeigneten Trocknungsgases wird ein schnelles Antrocknen bzw. Anbacken der Partikeloberfläche erreicht, womit das Granulat formstabil bleibt und die Granulatkörner kaum miteinander verkleben.

Da das der Wirbelschicht zugeführte Granulat einen hohen Wasseranteil von in der Regel etwa 75 % enthält, schwinden die Partikel während der Trocknung. Aufgrund des ungleichmäßigen Schwundes durch die schnelle Oberflächenantrocknung bei noch feuchtem inneren Zustand und des unterschiedlichen Abriebes entsteht im Verlauf des Trocknungsvorganges ein ungleichmäßig geformtes Trockengranulat mit Hohlräumen, in denen sich während der Trocknung Staub einlagert.

Somit wird die Staubmenge deutlich reduziert und die Gefahr einer Staubexplosion ohne weitere Zusatzmaßnahmen gebannt.

Die Größe und Form des getrockneten Granulats kann durch Einsatz verschiedenartiger Granulatoren und durch Variation der Betriebsparameter bei der Korngestaltung beeinflußt werden. Damit wird eine enge Korngrößenverteilung bei einem Korndurchmesser von wenigen Millimetern und eine Anpassung an den Anwendungsfall sowie an Kundenwünsche erreicht, z.B. für den Einsatz in Düngemittelstreuern oder zum Einblasen mit Druckluft in Verbrennungsanlagen.

Wenn das Granulat durch entsprechende technische Vorrichtungen unmittelbar nach seiner Modellierung und im freien Fall auf die Wirbelschicht aufgebracht wird, kann ein Verklumpen der Körner und ein Verkleben an Anlagenteilen vermieden und eine gute Vermischung mit den bereits angetrockneten Partikeln erreicht werden.

Eine unmittelbare Einbringung des Granulats unterhalb der Oberfläche der Wirbelschicht sorgt dafür, daß das Granulat sofort dem Trocknungsvorgang ausgesetzt ist.

Wenn ein Granulatvorprodukt, etwa in Form von eingekerbten Stäben, verwendet wird, läßt dies eine Vereinfachung des Formgebungsverfahrens und der Granuliereinrichtung zu, ohne die Qualität des Endproduktes zu mindern.

Durch eine Beschränkung der aufgebrachten Granulatkörner auf einen bestimmten Durchmesserbereich, d.h. der Verleihung einer bestimmten Partikelform und - größe, kann die diesbezügliche Forderung der Anwender hinsichtlich der Lagerungs-, Transport- und Verwendungsfähigkeit des Endproduktes erfüllt werden.

Eine Trocknung des Schlammes auf Trockensubstanzgehalte von über 90 % gewährleistet die biologische Stabilität des Endproduktes.

Mit der vorzugsweisen Verwendung von überhitztem Wasserdampf als Trocknungsmittel wird dessen hohe spezifische Wärmekapazität genutzt und ein sehr guter Wärmeübergang zum Trocknungsgut erreicht. Dadurch wird die Leimphase schnell überbrückt, die eingebrachte Energie effizient genutzt und ein niedriger Energieverbrauch bewirkt.

Der ausgetriebene Brüden kann praktisch vollständig kondensiert und das Kondensat in die Kläranlage geleitet werden. Solange die Wasserdampftemperatur den Wert von ca. 150°C nicht übersteigt, wird die organische Masse des Klärschlamms kaum zersetzt. Der ausgetriebene Brüden enthält in diesem Fall nur geringe Mengen an nicht kondensierbaren Gasen, so daß nur kleine Abgasmengen gereinigt werden müssen und unter günstigen Bedingungen überhaupt keine Abgasreinigung erforderlich ist.

Ferner enthält der überhitzte Wasserdampf keinen Sauerstoff und bannt damit von vorne herein jede Gefahr einer Selbstentzündung des Trocknungsgutes und einer Staubexplosion im Behälter.

Da die Temperatur des Trocknungsgutes während des Trocknungsvorganges über der Siedetemperatur des Wassers liegt, entsteht im Wirkungsbereich des Wasserdampfes ein Umfeld, in dem noch im Schlamm vorhandene pathogene Keime abgetötet werden.

Das Verfahren wird mit einem bereits getrockneten Granulat gestartet, da ein nur teilentwässerter Schlamm in sich und mit den Anlagenteilen verkleben könnte, und somit der Aufbau einer Wirbelschicht erschwert wäre.

Der Einsatz von Wärmetauschern mit entsprechenden Wärmetauscherflächen in der Wirbelschicht ermöglicht eine wirkungsvolle Einbringung von Wärmeenergie. Dies ist von erheblichem Vorteil, da der überhitzte Wasserdampf bereits in den ersten Zentimetern der Wirbelschicht erhebliche Energie an das Granulat abgibt.

Wenn Sattdampf mit vorzugsweise 5 bis 25 bar Überdruck als Heizmedium für die Wärmetauscher verwendet wird, kann die Übertragung einer großen Energiemenge bei relativ geringer Durchflußmenge an Heizmedium erreicht werden.

Durch einen geringfügigen Überdruck in der Trocknungsanlage wird das Eindringen von Luft über undichte Stellen verhindert.

Ein geringfügiger Unterdruck verhindert dagegen den Austritt des ungereinigten Brüdens aus der Trocknungsanlage.

Ein weiterer Vorteil des Verfahrens ist, daß durch die Verdichtung des aus dem Schlamm ausgetriebenen Brüdens mit einer entsprechenden Verdichtungseinrichtung und die anschließende Kondensation bei erhöhter Temperatur in einem Wärmetauscher, wie vorzugsweise dem Wärmetauscher in der Wirbelschicht, die Verdampfungsenergie des ausgetriebenenen Wassers als Kondensationswärme wiedergewonnen und in den Trocknungsprozeß zurückgeführt werden kann. Hierdurch wird der Energieverbrauch weiter gesenkt.

Die Vorrichtung läßt sich vorteilhaft ausgestalten, da auf eine Zumischeinrichtung für Trockensubstanz verzichtet werden kann. Damit läßt sich der vorrichtungstechnische Aufwand verringern und die Steuerung der Trocknungsanlage vereinfacht sich wesentlich.

Die Anordnung des Austrittsbereiches der Granuliereinrichtung oberhalb der Wirbelschicht ist von Vorteil, da die Austrittsöffnung so nicht durch die Beaufschlagung durch die Partikel beeinträchtigt wird.

Durch die Anordnung des Austrittsbereiches der Granuliereinrichtung innerhalb der Wirbelschicht wird erreicht, daß das Granulat sofort der Wirkung der Wirbelschicht ausgesetzt ist. Eventuell im Austrittsbereich der Granuliervorrichtung anklebende Partikel werden mit fortschreitender Trocknung unter Einwirkung bereits weitgehend getrockneter Partikel der Wirbelschicht wieder abgelöst.

Von weiterem Vorteil ist es, wenn eine Granuliereinrichtung verwendet wird, bei der die Formgebung mit einer Pressung verbunden ist. Damit wird die Gefahr eines Verklebens der Granulatkörner im Granulator oder beim Transport in den Trockner verringert und es gelangt zudem weniger Außenluft in den Trockner hinein. Zudem ist das Granulat beim Eintritt in die Wirbelschicht bereits wesentlich formstabiler als bei einem Granuliervorgang ohne Pressung, wie z.B. mit umlaufenden Messern.

Durch eine druckdichte Ausführung des Trocknungsbehälters wird sowohl der Lufteintritt als auch der Austritt von ungereinigtem Brüden verhindert.

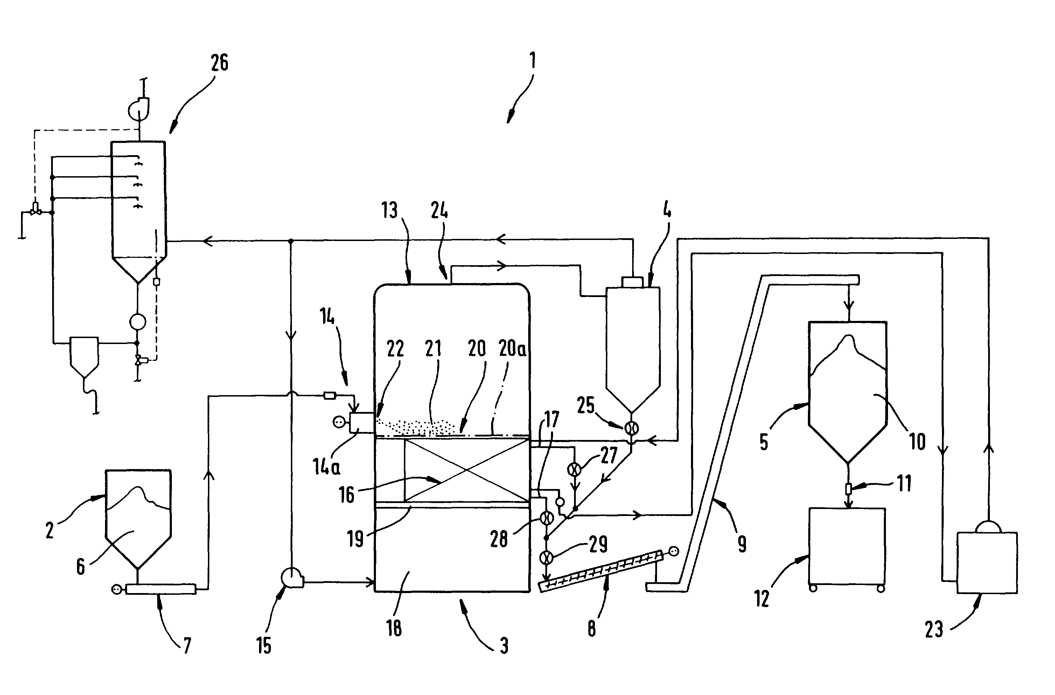

Die Erfindung wird in der folgenden Zeichnung anhand von Ausführungsbeispielen näher erläutert. Die einzige Figur der Zeichnung zeigt ein Verfahrensfließbild einer erfindungsgemäßen Trocknungsanlage.

Eine Trocknungsanlage 1 weist einen Frischschlammbunker 2, eine Trocknungsvorrichtung 3, eine Entstaubungsanlage 4 in Form eines Zyklons, und einen Trockengutbunker 5 auf.

Teilentwässerter Schlamm 6 wird durch eine Frischschlammpumpe 7 vom Frischschlammbunker 2 zur Trocknungsvorrichtung 3 gepumpt, dort getrocknet und über eine Schnecke 8 und ein Becherwerk 9 zum Trockengutbunker 5 verbracht. Der getrocknete Schlamm 10 wird über einen Dosierschieber 11 in einen Transportbehälter 12 abgefüllt.

Die Trocknungsvorrichtung 3 weist einen Trocknungsbehälter 13, eine Zuführeinrichtung 14, ein Gebläse 15, einen Wärmetauscher 16 und eine Entnahmeeinrichtung 17 auf.

Der Trocknungsbehälter 13 hat einen unteren Vorlageraum 18, in dem durch das Gebläse 15 ein Dampfwirbelbett mit überhitztem Wasserdampf als Trocknungsgas aufgebaut und aufrechterhalten wird. Oberhalb einer gasdurchlässigen Bodenplatte bzw. Abstützung 19 bildet sich im Betrieb eine Wirbelschicht 20, deren Oberfläche 20a strichpunktiert angedeutet ist, aus, in der der teilentwässerte Schlamm 6 getrocknet wird.

Die Zuführeinrichtung 14 weist eine in der Funktion eines Granulators vorgesehene Granuliereinrichtung 14a auf. Durch diese wird ein Granulat 21 gebildet und über einen Austrittsbereich 22 der Granuliereinrichtung 14a in die Wirbelschicht 20 des Trocknungsbehälters 13 gebracht.

In der Wirbelschicht 20 befinden sich Granulatkörner in allen Stadien der Trocknung, die von überhitztem Wasserdampf umströmt, in Bewegung versetzt und somit getrocknet werden. Das neu eingebrachte Granulat 21 vermischt sich mit den bereits in der Wirbelschicht 20 befindenden Partikeln, deren große Anzahl und hoher Trockensubstanzgehalt die Trocknung der neu zugeführten Partikel beschleunigt. Aufgrund der günstigen Ausbildung in kleinen Partikelabmessungen, wird eine gute Formstabilität und eine verhältnismäßig große Oberfläche erreicht.

Die Oberfläche des Granulats 21 trocknet bei diesen Verhältnissen schnell und verhindert so durch die rasche Überwindung der "Klebe- bzw. Leimphase" ein Verklumpen der Körner, obwohl das Innere der Partikel die Bedingungen der Leimphase noch nicht überbrückt hat. Es entsteht ein steifes Außengerippe, bei einem noch weichen Innenbereich. Im Verlauf des Trocknungsvorganges trocknet das Granulat dann vollständig bis zu einem Trockensubstanzgehalt von mehr als 90 % aus. Dabei entsteht aufgrund des Schwundes und des Abriebes an anderen Partikeln ein ungleichmäßig geformtes Trockengranulat mit Hohlräumen.

Durch das schnelle Antrocknen an der Oberfläche behält das Granulat im wesentlichen seine durch die Gestaltung vorgegebene Größe bei und es entsteht getrocknetes, poröses Granulat mit einem Durchmesser von einigen Millimetern.

Der sich durch den Abrieb bildende Staub kann zum Teil an die sich oberflächenseitig noch in der Leimphase befindenden Partikel, zum Teil in den Hohlräumen der Granulatkörner angelagert werden.

In der Wirbelschicht 20 befindet sich der Wärmetauscher 16, der von einer Dampfversorgung 23 mit Sattdampf von 5 bis 25 bar Überdruck versehen wird und damit die Wirbelschicht 20 beheizt. Damit wird der als Trocknungsmittel eingesetzte überhitzte Wasserdampf mit Energie versorgt, um die an das Granulat 21 abgegebene Wärme zu ersetzen und so die Funktion aufrecht zu erhalten.

Der durch den Trocknungsprozeß verunreinigte überhitzte Wasserdampf, der sogenannte Brüden, wird über einen Auslaß 24 zur Entstaubungsanlage 4 abgeführt. Dort werden die Staub- und Feinkornanteile abgetrennt und über eine Zellradschleuse 25 mit dem getrockneten Schlamm 10 zusammengeführt. Über das Gebläse 15 wird der gereinigte Brüden wieder der Trocknungsvorrichtung 3 zugeführt. Durch die vom teilentwässerten Schlamm 6 zugeführte Feuchtigkeit entsteht ein Brüdenüberschuß, der nach der Entstaubung einer Kondensations- und Reinigungsvorrichtung 26 zugeführt wird. Dort kondensiert der Brüden und die nicht kondensierbaren Anteile werden dabei gleichzeitig gewaschen und, falls erforderlich, zur Desodorierung weitergeleitet.

Der getrocknete Schlamm 10 wird über die Entnahmeeinrichtung 17 und über Zellradschleusen 27, 28 und 29 entnommen. Über die Schnecke 8 und das Becherwerk 9 wird er schließlich zum Trockengutbunker 5 verbracht.

Zur Verhinderung der Kondensation von Wasserdampf in den Entnahmeleitungen aus der Wirbelschicht 20 und der Entstaubungsanlage 4 sind diese bis zur Zellradschleuse 29 thermisch isoliert und beheizbar. Um Selbstentzündungen des ausgetragenen, getrockneten Schlammes auszuschließen, wird die Schnecke 8 gekühlt.

Gemäß einer weiteren Ausführungsform der Erfindung ist eine weitere Verfahrensvariante möglich, die sich besonders für Schlämme eignet, bei deren Trocknung nur wenig Staub entsteht. Im Unterschied zum vorstehend beschriebenen Verfahren wird nicht der gesamte den Trockner 3 beim Auslaß 24 verlassende Brüden zur Entstaubungsanlage 4 geführt, sondern nur der überschüssige aus dem Trocknungsgut ausgetriebene Brüden. Der überwiegende Teil des den Trockner 3 beim Auslaß 24 verlassenden Brüdens dient wiederum als Fluidisierungsmittel für die Wirbelschicht und als Wärmeträger und wird direkt über ein mit staubhaltigem Brüden beaufschlagbares Gebläse 15 ohne Entstaubung wieder in den Trockner geleitet. Bei dieser Verfahrenvariante reicht eine erheblich kleiner dimensionierte Entstaubungsanlage 4 aus.

Es ist auch möglich, auf die Entstaubungsanlage 4 zu verzichten und den überschüssigen, staubbeladenen Brüden direkt in die Kondensations- und Reinigungsanlage 26 zu leiten. In dieser Anlage 26 wird der Brüden z.B. mit Hilfe von eingesprühten kaltem Wasser kondensiert und der Staub in das Kondensat übergeführt. Das staubbeladene Kondensat kann dann in die Kläranlage geleitet werden.

Falls allerdings die energetisch günstige Brüdenkompression in die Anlage integriert werden soll, wird die Entstaubungsanlage 4 benötigt, da der Brüden vor dem Eintritt in den Verdichter entstaubt werden muß.

Wie die vorstehende Beschreibung zeigt, läßt die Erfindung eine Vielzahl von Abwandlungen und Abänderungen zu, ohne den Rahmen der Erfindung zu verlassen.

So kann z.B. das Granulat 21 im freien Fall auf die Wirbelschicht 20 aufgebracht werden. Dazu muß der Austrittsbereich 22 der Granuliereinrichtung 14a oberhalb der Wirbelschichtoberfläche 20a angeordnet sein. Von Vorteil ist es dabei, wenn das Granulat 21 im Zuge seiner Aufbringung über die Oberfläche der Wirbelschicht 20a verteilt wird. Hierdurch kann eine größere Menge eingebracht und ein schnelles Antrocknen der Partikel erreicht werden.

Das Granulat 21 kann aber auch unmittelbar in die Wirbelschicht 20 eingebracht werden, wozu der Austrittsbereich 22 der Granuliereinrichtung 14a unterhalb der Wirbelschichtoberfläche 20a angeordnet wird. Dann könnten sich evtl. im Auslaßbereich der Granuliereinrichtung angeklebte Partikel aufgrund der Einwirkung bereits getrockneter Partikel wieder ablösen.

Die Granuliereinrichtung 14a kann statt des Granulats 21 auch ein Vorprodukt hiervon, z.B. in Form von eingekerbten Stäben, erzeugen. Dies hat den Vorteil, daß sich der Stab über die Wirbelschicht 20 ausbreiten kann, dann bei einer gewissen Überdeckung abbricht, in die Wirbelschicht fällt und dort aufgeteilt wird. Hierdurch wird eine gute Verteilung des Granulats 21 auf die Wirbelschicht 20 erreicht.

Weiterhin ist es möglich den Trocknungsbehälter 13 mit einem geringfügigen Überdruck zu belegen, um das Eindringen von Luft zu verhindern. Durch einen leichten Unterdruck im Trocknungsbehälter 13 kann aber auch der Austritt von ungereinigtem Brüden vermieden werden.

Zur Senkung des Energieverbrauchs ist es möglich, die energetisch günstige Brüdenkompression in die Anlage zu integrieren. In diesem Fall wird der aus dem Klärschlamm ausgetriebene Brüden nicht, wie im Flußschema dargestellt, in der Kondensations- und Reinigungsvorrichtung 26 kondensiert, sondern z.B. mit einem Schraubenverdichter komprimiert und unter erhöhtem Druck in einem Wärmetauscher, z.B. dem in der Wirbelschicht 20 eingebauten Wärmetauscher 16, bei höherer Temperatur kondensiert. So wird ein wesentlicher Teil der Verdampfungswärme des ausgetriebenen Wassers in den Trocknungsprozeß zurückgeführt und der Energieverbrauch gesenkt. Die Dampfversorgung 23 wird gegebenenfalls nur zum Anfahren der Anlage benötigt.

Zur Senkung des Energieverbrauchs ist es ferner möglich, die Trocknung mehrstufig durchzuführen. In diesem Fall wird die erste Wirbelschichttrocknung bei einem hohen Systemdruck im Trockner durchgeführt. Der in dieser ersten Stufe ausgetriebene Brüden kann dann zur Kondensation in den Wärmetauscher eines Wirbelschichttrockners der zweiten, vergleichbar aufgebauten Stufe geleitet werden, in der die erfindungsgemäße Trocknung bei niedrigerem Druck durchgeführt wird. An diese zweite Stufe können sich entsprechend eine dritte und bei Bedarf noch weitere Stufen anschließen.

## Patentansprüche

1. Verfahren zur kontinuierlichen Trocknung von Protein enthaltendem Schlamm, insbesondere Klärschlamm, in einer Wirbelschicht (20), die von einem Trocknungsgas durchströmt wird, wobei der Wirbelschicht (20) teilentwässerter Schlamm (6) in Granulatform (21) zugeführt und getrockneter Schlamm (10) entnommen wird,
**dadurch gekennzeichnet,**
daß die Granulatkörner ohne Zugabe von Trockensubstanz ausgebildet werden und daß der Granuliervorgang vorzugsweise mit einer Pressung verbunden ist.

2. Verfahren nach Anspruch 1, dadurch gekennzeichnet, daß das Granulat (21) oder ein Vorprodukt hiervon unmittelbar nach seiner Erzeugung im freien Fall auf die Wirbelschicht (20) aufgebracht wird.

3. Verfahren nach Anspruch 1, dadurch gekennzeichnet, daß das Granulat (21) oder ein Vorprodukt hiervon unmittelbar in die Wirbelschicht (20) unterhalb von deren Oberfläche (20a) eingebracht wird.

4. Verfahren nach einem der Ansprüche 1 bis 3, dadurch gekennzeichnet, daß die aufgebrachten Granulatkörner (21) im Durchschnitt mit einem Durchmesser im Bereich von 1 bis 10 mm, vorzugsweise 3 bis 7 mm, insbesondere etwa 5 mm, verwendet werden.

5. Verfahren nach einem der Ansprüche 1 bis 4, dadurch gekennzeichnet, daß der teilentwässerte Schlamm (6) auf Trockensubstanzgehalte von mindestens 90 % der Masse des getrockneten Produktes getrocknet wird.

6. Verfahren nach einem der Ansprüche 1 bis 5, dadurch gekennzeichnet, daß als Trocknungsgas überhitzter Wasserdampf verwendet wird.

7. Verfahren nach einem der Ansprüche 1 bis 6, dadurch gekennzeichnet, daß der Verfahrensanlauf mit einer Wirbelschicht (20) aus bereits getrocknetem Schlamm (10) in Granulatform durchgeführt wird.

8. Verfahren nach einem der Ansprüche 1 bis 7, dadurch gekennzeichnet, daß die Wirbelschicht (20) mittels Wärmetauscher (16) beheizt wird.

9. Verfahren nach Anspruch 8, dadurch gekennzeichnet, daß als Heizmedium für die Wärmetauscher (16) Sattdampf mit einem Überdruck von vorzugsweise 5 bis 25 bar verwendet wird.

10. Verfahren nach einem der Ansprüche 1 bis 9, dadurch gekennzeichnet, daß die Trocknung bei einem geringfügig über dem Atmosphärendruck liegenden Druck durchgeführt wird.

11. Verfahren nach einem der Ansprüche 1 bis 9, dadurch gekennzeichnet, daß die Trocknung bei einem geringfügig unter dem Atmosphärendruck liegenden Druck durchgeführt wird.

12. Verfahren nach einem der Ansprüche 1 bis 11, dadurch gekennzeichnet, daß der aus dem getrockneten Schlamm (10) ausgetriebene Brüden verdichtet und unter dem durch die Verdichtung erhöhten Druck vorzugsweise in dem in der Wirbelschicht (20) untergebrachten Wärmetauscher (16) kondensiert wird.

13. Vorrichtung zur kontinuierlichen Trocknung von Protein enthaltendem Schlamm, insbesondere Klärschlamm, in einer Wirbelschicht (20),
mit einem Trocknungsbehälter (13), der einen unteren Vorlageraum (18) für Trocknungsgas und eine gasdurchlässige Abstützung (19) für die Wirbelschicht (20) aufweist,
mit einer Zuführeinrichtung (14) für den teilentwässerten Schlamm (6)
und mit einer Entnahmeeinrichtung (17) für den getrockneten Schlamm (10),
wobei die Zuführeinrichtung (14) eine Granuliereinrichtung (14a) aufweist,
**dadurch gekennzeichnet,**
daß die Zuführeinrichtung (14) frei ist von einer Zumischeinrichtung für Trockensubstanz.

14. Vorrichtung nach Anspruch 13, dadurch gekennzeichnet, daß der Austrittsbereich (22) der Granuliereinrichtung (14a) in Nachbarschaft oder innerhalb der Umfangswand des Trocknungsbehälters (13) und oberhalb der Abstützeinrichtung (19) für die Wirbelschicht (20) angeordnet ist.

15. Vorrichtung nach Anspruch 14, dadurch gekennzeichnet, daß der Austrittsbereich (22) der Granuliereinrichtung (14a) oberhalb der Oberfläche der Wirbelschicht (20a) angeordnet ist.

16. Vorrichtung nach Anspruch 14, dadurch gekennzeichnet, daß der Austrittsbereich (22) der Granuliereinrichtung (14a) unterhalb der Oberfläche der Wirbelschicht (20a) angeordnet ist.

17. Vorrichtung nach einem der Ansprüche 13 bis 16, dadurch gekennzeichnet, daß die Granuliereinrichtung (14a) zur Erzeugung eines Vorproduktes des Granulats (21), z.B. in Form von eingekerbten Stäben, ausgebildet ist.

18. Vorrichtung nach einem der Ansprüche 13 bis 17, dadurch gekennzeichnet, daß die Granuliereinrichtung (14a) beim Granuliervorgang Preßkräfte auf die Granulatkörner ausübt.

19. Vorrichtung nach einem der Ansprüche 13 bis 18, dadurch gekennzeichnet, daß die aufgebrachten Granulatkörner (21) im Durchschnitt einem Durchmesser im Bereich von 1 bis 10 mm, vorzugsweise 3 bis 7 mm, insbesondere etwa 5 mm, aufweisen.

20. Vorrichtung nach einem der Ansprüche 13 bis 19, dadurch gekennzeichnet, daß in der Wirbelschicht (20) wenigstens ein Wärmetauscher (16) mit Wärmetauscherflächen vorhanden ist, die vom Material der Wirbelschicht (20) beaufschlagbar sind.

21. Vorrichtung nach einem der Ansprüche 13 bis 20, dadurch gekennzeichnet, daß der Trocknungsbehälter (13) druckdicht ausgeführt ist.

22. Vorrichtung nach einem der Ansprüche 13 bis 21, gekennzeichnet durch eine Einrichtung, enthaltend einen Verdichter und einen Kondensator, zur Wärmerückgewinnung der im ausgetriebenen Brüden enthaltenen Wärmeenergie.

## Claims

1. A process for continuously drying protein-containing sludge, in particular sewage sludge, in a fluidised bed (20) through which a drying gas flows, wherein partially de-watered sludge (6) is added to the fluidised bed (20) in granulate form (21) and dried sludge (10) is removed therefrom,
**characterised in that**
the granules are formed without the addition of dried substances and the granulating process is preferably combined with pressing.

2. The process according to claim 1, characterised in that the granular material (21) or a preliminary product thereof is applied onto the fluidised bed (20) immediately following its production and by gravity.

3. The process according to claim 1, characterised in that the granular material (21) or a preliminary product thereof is introduced directly into the fluidised bed (20) below the surface (20a) thereof.

4. The process according to any one of claims 1 to 3, characterised in that the applied granules (21) are used while having an average diameter in the range of 1 to 10 mm, preferably 3 to 7 mm, in particular about 5 mm.

5. The process according to any one of claims 1 to 4, characterised in that the partially de-watered sludge (6) is dried to have a dry substances content of at least 90% of the mass of the dried product.

6. The process according to any one of claims 1 to 5, characterised in that superheated water vapor is used as a drying gas.

7. The process according to any one of claims 1 to 6, characterised in that process start-up is carried out by using a fluidised bed (20) of already dried sludge (10) in granulate form.

8. The process according to any one of claims 1 to 7, characterised in that the fluidised bed (20) is heated by means of a heat exchanger (16).

9. The process according to claim 8, characterised in that saturated steam having a pressure above atmospheric of preferably 5 to 25 bar is used as a heating medium for the heat exchanger (16).

10. The process according to any one of claims 1 to 9, characterised in that drying is performed at a pressure slightly above atmospheric pressure.

11. The process according to any one of claims 1 to 9, characterised in that drying is performed at a pressure slightly below atmospheric pressure.

12. The process according to any one of claims 1 to 11, characterised in that the exhaust vapor expelled from the dried sludge (10) is compressed and condensed under the pressure elevated as a result of compression, preferably in the heat exchanger (16) accommodated in the fluidised bed (20).

13. A device for continuously drying protein-containing sludge, in particular sewage sludge, in a fluidised bed (20), comprising
a drying container (13) which includes a lower receiving chamber (18) for drying gas and a gas-permeable support (19) for the fluidised bed (20),
means (14) for feeding the partially de-watered sludge (6)
and means (17) for withdrawing the dried sludge (10),
said feeding means (14) including granulating means (14a),
**characterised in that**
said feeding means (14) do not include means for admixing dried substances.

14. The device according to claim 13, characterised in that the outlet range (22) of the granulating means (14a) is positioned adjacent to, or inside, the peripheral wall of the drying container (13) and above the means (19) supporting the fluidised bed (20).

15. The device according to claim 14, characterised in that the outlet range (22) of the granulating means (14a) is positioned above the surface of the fluidised bed (20a).

16. The device according to claim 14, characterised in that the outlet range (22) of the granulating means (14a) is positioned below the surface (20a) of the fluidised bed.

17. The device according to any one of claims 13 to 16, characterised in that the granulating means (14a) are adapted to form a preliminary product of the granular material (21), e.g. having the form of notched rods.

18. The device according to any one of claims 13 to 17, characterised in that the granulating means (14a) subject the granules to pressing forces during the granulating process.

19. The device according to any one of claims 13 to 18, characterised in that the applied granules (21) present average diameters in the range of 1 to 10 mm, preferably 3 to 7 mm, in particular about 5 mm.

20. The device according to any one of claims 13 to 19, characterised in that at least one heat exchanger (16) is present in the fluidised bed (20) and includes heat exchanger surfaces onto which the material of the fluidised bed (20) may be applied.

21. The device according to any one of claims 13 to 20, characterised in that the drying container (13) is adapted to be pressure-tight.

22. The device according to any one of claims 13 to 21, characterised by means containing a compressor and a condenser, for heat recuperation of the heat energy contained in the expelled exhaust vapor.

## Revendications

1. Procédé de séchage en continu d'une boue contenant des protéines, en particulier de boues d'épuration, dans une couche fluidisée (20) qui est traversée par un gaz de séchage, une boue partiellement déshydratée (6) sous la forme de granulés (21) étant amenée dans ladite couche fluidisée (20), et une boue séchée (10) étant retirée de celle-ci, caractérisé en ce que les granulés sont formés sans addition de substance sèche et en ce que le processus de granulation est associé de préférence à une compression.

2. Procédé selon la revendication 1, caractérisé en ce que les granulés (21) ou un précurseur de ceux-ci sont appliqués en chute libre sur la couche fluidisée (20) directement après leur fabrication.

3. Procédé selon la revendication 1, caractérisé en ce que les granules (21) ou un précurseur de ceux-ci sont introduits directement dans la couche fluidisée (20) au-dessous de la surface (20a) de celle-ci.

4. Procédé selon l'une des revendications 1 à 3, caractérisé en ce qu'on utilise les granulés (21) appliqués avec un diamètre moyen compris dans la plage de 1 à 10 mm, de préférence de 3 à 7 mm, en particulier d'environ 5 mm.

5. Procédé selon l'une des revendications 1 à 4, caractérisé en ce que la boue partiellement déshydratée (6) est séchée jusqu'à l'obtention d'une teneur en substance sèche d'au moins 90 % de la masse du produit séché.

6. Procédé selon l'une des revendications 1 à 5, caractérisé en ce qu'on utilise de la vapeur d'eau surchauffée en tant que gaz de séchage.

7. Procédé selon l'une des revendications 1 à 6, caractérisé en ce qu'on démarre le procédé avec une couche fluidisée (20) formée d'une boue (10) déjà séchée sous la forme de granules.

8. Procédé selon l'une des revendications 1 à 7, caractérisé en ce que la couche fluidisée (20) est chauffée au moyen d'échangeurs de chaleur (16).

9. Procédé selon la revendication 8, caractérisé en ce qu'on utilise de la vapeur saturée à une surpression comprise de préférence entre 5 et 25 bars en tant que milieu de chauffage pour les échangeurs de chaleur (16).

10. Procédé selon l'une des revendications 1 à 9, caractérisé en ce qu'on effectue le séchage à une pression légèrement supérieure à la pression atmosphérique.

11. Procédé selon l'une des revendications 1 à 9, caractérisé en ce qu'on effectue le séchage à une pression légèrement inférieure à la pression atmosphérique.

12. Procédé selon l'une des revendications 1 à 11, caractérisé en ce que la vapeur chaude expulsée de la boue séchée (10) est comprimée et condensée dans l'échangeur de chaleur (16) logé de préférence dans la couche fluidisée (20), à la pression augmentée sous l'effet de la compression.

13. Procédé de séchage en continu d'une boue contenant des protéines, en particulier de boues d'épuration, dans une couche fluidisée (20),
avec une cuve de séchage (13) qui comporte un récipient collecteur inférieur (18) pour le gaz de séchage et un support (19) perméable aux gaz pour la couche fluidisée (20),
avec un dispositif d'amenée (14) pour la boue partiellement déshydratée (6),
et avec un dispositif d'évacuation (17) pour la boue séchée (10),
le dispositif d'amenée (14) comprenant un dispositif de granulation (14a),
caractérisé en ce que le dispositif d'amenée (14) ne comprend pas de dispositif de mélange pour la substance sèche.

14. Dispositif selon la revendication 13, caractérisé en ce que la zone de sortie (22) du dispositif de granulation (14a) est disposée à proximité ou à l'intérieur de la paroi périphérique de la cuve de séchage (13) et au-dessus du dispositif de support (19) pour la couche fluidisée (20).

15. Dispositif selon la revendication 14, caractérisé en ce que la zone de sortie (22) du dispositif de granulation (14a) est disposée au-dessus de la surface de la couche fluidisée (20a).

16. Procédé selon la revendication 14, caractérisé en ce que la zone de sortie (22) du dispositif de granulation (14a) est disposée au-dessous de la surface de la couche fluidisée (20a).

17. Dispositif selon l'une des revendications 13 à 16, caractérisé en ce que le dispositif de granulation (14a) est réalisé de façon à produire un précurseur de granulés (21), par exemple sous la forme de bâtonnets entaillés.

18. Dispositif selon l'une des revendications 13 à 17, caractérisé en ce que le dispositif de granulation (14a) exerce des forces de compression sur les granulés pendant le processus de granulation.

19. Dispositif selon l'une des revendications 13 à 18, caractérisé en ce que les granulés appliqués (21) ont un diamètre moyen compris dans la plage de 1 à 10 mm, de préférence de 3 à 7 mm, en particulier d'environ 5 mm.

20. Dispositif selon l'une des revendications 13 à 19, caractérisé en ce qu'au moins un échangeur de chaleur (16) ayant des surfaces échangeuses de chaleur qui peuvent être heurtées par le matériau de la couche fluidisée (20) est présent dans la couche fluidisée (20).

21. Dispositif selon l'une des revendications 13 à 20, caractérisé en ce que la cuve de séchage (13) est réalisée de façon à être résistante à la pression.

22. Dispositif selon l'une des revendications 13 à 21, caractérisé par une installation contenant un compresseur et un condenseur pour le recyclage de la chaleur de l'énergie thermique contenue dans la vapeur chaude expulsée.
